# EUROPÄISCHE PATENTSCHRIFT

(11) **EP 0 578 072 B1**
(45) Veröffentlichungstag und Bekanntmachung des Hinweises auf die Patenterteilung: **10.04.1996**
(21) Anmeldenummer: 93110147.1
(22) Anmeldetag: 25.06.1993
(51) Int. Cl.: B60D 1/46

(54) **Vorrichtung zum Halten einer Anhänge-Kupplungs-Tragplatte**
Device for holding a trailer coupling supporting plate
Dispositif pour fixer une plaque de support d'un attelage de remorque

(30) Priorität: 08.07.1992 DE 4222342
(43) Veröffentlichungstag der Anmeldung: 12.01.1994
(73) Patentinhaber: Sauermann, Hans, D-86558 Freinhausen (DE)
(72) Erfinder: Sauermann, Hans, D-86558 Freinhausen (DE)
(74) Vertreter: Sasse, Volker, Dipl.-Ing.

(56) Entgegenhaltungen:
- EP-A- 0 137 520
- EP-A- 0 215 443
- EP-A- 0 283 370
- EP-A- 0 388 363
- EP-A- 0 446 598
- US-A- 3 269 751

## Beschreibung

Die Erfindung betrifft eine Vorrichtung gemäß dem Oberbegriff des Patentanspruchs 1.

Bei einer derartigen, aus EP-A-0 137 520 bekannten Vorrichtung steht der Drehgriff der Stange bei in die Verriegelungsaufnahme eingreifenden Verriegelungsgliedern von der vertikal in den U-Schienen sitzenden Tragplatte nach oben. Um die Verriegelungsglieder außer Eingriff zu bringen, muß der Drehgriff um 90° gedreht werden, bis er von der Vorderseite der Tragplatte absteht. Um dann die Tragplatte mit dem Kupplungskopf in der Höhe verstellen zu können, muß die Bedienungsperson an geeigneten Stellen mit beiden Händen angreifen und die Tragplatte in den U-Schienen verschieben. Ist die neue Höhenlage der Tragplatte gefunden, In der wiederum ein Paar der Verriegelungsaufnahmen mit den Verriegelungsgliedern ausgerichtet ist, muß der Drehgriff wieder verdreht werden, wobei gleichzeitig die Tragplatte in dieser Position gehalten werden muß. Dies ist eine sehr mühselige Prozedur, bei der die Bedienungsperson fast zwangsweise mit schmutzigen Komponenten der Anhängekupplung in Kontakt kommt oder an öligen Flächen leicht abrutscht und sich verletzen kann. Außerdem ist es mühsam, durch Bücken und Hineinschauen in die U-Schienen festzustellen, ob in der neu gewählten Höhenlage tatsächlich die Verriegelungsaufnahme mit den Verriegelungsgliedern so fluchten, daß sich der Drehgriff problemlos wieder verdrehen lassen wird. Ferner besteht die permanente Gefahr, daß der Drehgriff aus Versehen von Hand oder durch einen dagegenstoßenden Gegenstand verdreht wird, so daß die Tragplatte dann in den U-Schienen unkontrolliert herabfallen kann.

Aus der Praxis ist ferner eine Vorrichtung bekannt, bei der die Verriegelungsglieder durch Federkraft über die Seitenränder der Tragplatte ausfahrbare Zapfen sind, die in Sacklöcher in den Führungen der Tragplatte eingreifen. Bei dieser bekannten Vorrichtung ist die Bedienung mühsam, da die Zapfen nur unwillig in die genau passenden Sacklöcher einrasten. Auch besteht die permanente Gefahr, daß die beiden Zapfen nicht vollständig einrasten, weil sich die Tragplatte aufgrund des unvermeidlichen Spiels in den Führungen verkanten kann. Dies leiert die Sackbohrungen aus und birgt die permanente Gefahr in sich, daß die Tragplatte unter Last selbsttätig verstellt wird. Es bleibt nämlich schlecht kontrollierbar der elastischen Wirkung der Federn überlassen, wie weit und ob die Zapfen überhaupt einrasten.

Bei beiden bekannten Vorrichtungen ist es ferner nachteilig, daß die Tragplatte bei einseitigem Angriff zur Höhenverstellung in den U-Schienen verkantet und sich nur widerwillig bewegen läßt. Die Bedienungsperson greift nämlich zumeist dort an, wo dies ergonomisch am günstigsten empfunden wird, wobei sich dann aber ein einseitiger die Tragplatte verkantender Kraftangriff oft nicht vermeiden läßt.

Der Erfindung liegt die Aufgabe zugrunde, eine Vorrichtung der eingangs genannten Art auf baulich einfache Weise in ihrer Funktionssicherheit zu verbessern und bedienungsfreundlicher zu gestalten.

Die gestellte Aufgabe wird mit den im kennzeichnenden Teil des Patentanspruchs 1 angegebenen Merkmalen gelöst.

Bei dieser Ausbildung wird die Bedienungsperson ohne weitere Einweisung und durch herstellerseitig vorgesehene konstruktive Maßnahmen von vornherein dazu gebracht, beim Höhenverstellen der Tragplatte den Haltegriff im Greifbereich zu fassen. Da sich der Greifbereich oberhalb des Schwerpunktes der Tragplatte befindet, läßt sich die Tragplatte sehr leicht höhenverstellen, sobald die Verriegelungsglieder außer Eingriff gebracht worden sind. Das Lösen der Verriegelungsglieder gestaltet sich einfach, weil gleichzeitig am Haltegriff eine das Verdrehen der Stange erleichternde Entlastung bewirkt wird. Die Bedienungsperson halt die Tragplatte wie eine Handtasche oberhalb des Schwerpunkts, so daß die Tragplatte in den U-Schienen trotz des konstruktiv vorgegebenen Führungsspiels nicht mehr verkantet, sondern leichtgängig gleitet. Die Verletzungsgefahr für die Bedienungsperson ist gering. Die Bedienungsperson macht sich die Hände nicht schmutzig. Es ist außerdem nicht erforderlich, das genaue Fluchten der Verriegelungsglieder mit den Verriegelungsaufnahmen in gebückter Stellung zu überprüfen weil die Bedienungsperson die Tragplatte bequem am Haltegriff halten und geringfügig auf- und abverschieben kann, wahrend sie gleichzeitig mittels des Drehgriffes anhand des spürbar nachlassenden Drehwiderstandes merkt, wenn die Verriegelungsglieder in ein Verriegelungsaufnahmepaar einzugreifen beginnen. Eine Drehsicherungsvorrichtung beseitigt die Gefahr einer ungewollten Verstellung der Verriegelungsglieder, weil die Stange nur bei bewußter Entriegelung verdrehbar ist.

Zweckmäßigerweise liegt gemäß Anspruch 2 der Greifbereich des Haltegriffes oberhalb des Schwerpunkts der mit dem Kupplungskopf bestückten Tragplatte. Da der Haltegriff von allen Seiten für die Hand der Bedienungsperson frei zugänglich ist, wird ein bequemes und ergonomisch günstiges Arbeiten beim Höhenverstellen der Anhängekupplung gewährleistet.

Eine baulich einfache, robuste und kostengünstige Ausführungsform geht aus Anspruch 3 hervor. Diese Lösung ist speziell auf die zumeist groben Arbeitsbedingungen an solchen Vorrichtungen abgestimmt.

Eine besonders zweckmäßige Ausführungsform geht ferner aus Anspruch 4 hervor. Die Drehsicherungsvorrichtung ist hierbei besonders ergonomisch angeordnet, so daß sie leicht zu bedienen ist.

Die Ausführungsform gemäß Anspruch 5 ist darauf abgestellt, daß die Stange in der Eingriffsstellung der Verriegelungsglieder gegen ein ungewolltes oder unkontrollierts Verdrehen gesichert sein soll.
Bei der Ausführungsform gemäß Figur 6 läßt sich die Stange sogar in den beiden Drehstellungen sichern.

Im Hinblick auf die Bedienungsfreundlichkeit ist die Ausführungsform gemäß Anspruch 7 vorteilhaft. Die Bedienungsperson hält beim Höhenverstellen der Tragplatte den Haltegriff mit der Hand und kann die Sicherungsvorrichtung mit dem Daumen bedienen, ohne die Hand vom Haltegriff lösen zu müssen.

Eine baulich einfache, funktionssichere und robuste Ausführungsform mit hohem Bedienungskomfort geht aus Anspruch 8 hervor. Die Stange wird durch die Drehsicherungsvorrichtung beispielsweise in der Eingriffsstellung der Verriegelungsglieder festgelegt, so daß eine ungewollte Verstellung und damit ein Herabfallen der Tragplatte ausgeschlossen sind. Wird dann bei am Haltegriff gehaltener Tragplatte die Drehsicherungsvorrichtung betätigt, dann läßt sich die Stange mittels des Drehgriffes verdrehen, um die Verriegelungsglieder zu lösen. Dann kann die Tragplatte in jeder Richtung so weit verschoben werden, bis die Verriegelungsglieder wiederum auf ein neues Verriegelungsaufnahmepaar ausgerichtet sind. Vorausgesetzt, daß die Federkraft, die die Stange zu verdrehen sucht, ausreichend bemessen ist, wird die Stange bei Erreichen der neuen Höhenlage selbsttätig wieder verdreht, bis der Sicherungsbügel in die Vertiefung einfällt und die Tragplatte automatisch in der neuen Höhenlage verriegelt ist. Ist die Federkraft hingegen nicht so stark bemessen, dann unterstützt sie zumindest das Zurückdrehen der Stange mittels des Drehgriffs. Zweckmäßiger ist es jedoch, die Federkraft so groß zu bemessen, daß die Stange selbsttätig zurückgedreht wird, wenn die Verriegelungsglieder in den Verriegelungsaufnahmen der U-Schienen freikommen. Die durch die Federkraft bewirkte Anpressung der Verriegelungsglieder in den U-Schienen zweckmäßig, weil der Höhenverstellbewegung der Tragplatte ein gleichbleibender, niedriger Bewegungswiderstand entgegenwirkt, so daß sich eine gedämpfte Stellbewegung ergibt.

Die Bedienung der Vorrichtung ist bei der Ausführungsform gemäß Anspruch 9 besonders komfortabel. Außerdem ist die Drehsicherungsvorrichtung sehr stabil und funktionssicher, da der Sicherungsbügel stabil gehalten und trotzdem leichtgängig beweglich ist.

Eine weitere, vorteilhafte Ausführungsform geht aus Anspruch 10 hervor. Die Gleit- und Führungsbahn unterstützt das Verdrehen der Stange unter der Wirkung der Federkraft.

Die Gefahr, sich den Daumen zu quetschen oder ein unbequem kleiner Druckbereich am freien Ende des ersten Schenkels ist bei der Ausführungsform gemäß Anspruch 11 vermieden.

Die Ausführungsform gemäß Anspruch 12 ist wichtig, weil der sich gegebenenfalls beim Zurückdrehen der Stange rasch bewegende Drehgriff die andere, den Haltegriff haltende Hand nicht treffen kann. Außerdem ist die ordnungsgemäß eingerastete Stellung der Stange optisch sofort zu erkennen. Der Haltegriff und der Drehgriff stehen bei verriegelter Tragplatte nicht über die Vorderseite der Tragplatte vor.

Anhand der Zeichnung wird eine Ausführungsform des Erfindungsgegenstandes erläutert.

Es zeigt:
- Figur 1: eine Vorderansicht einer Vorrichtung zum höhenverstellbaren Halten der Tragplatte einer Anhängekupplung und
- Figur 2: eine Draufsicht mit einem Teilschnitt der Vorrichtung von Figur 1 in der Ebene II-II.

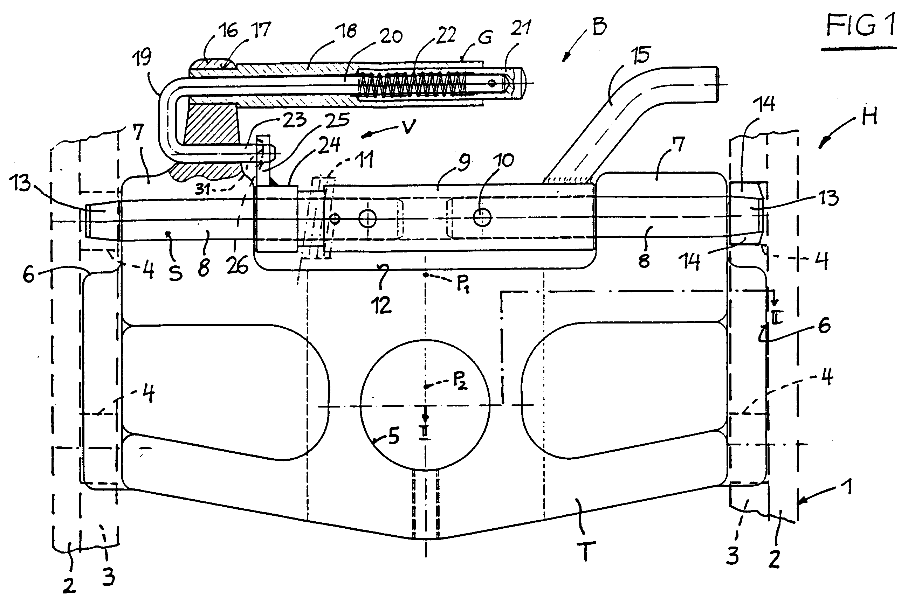

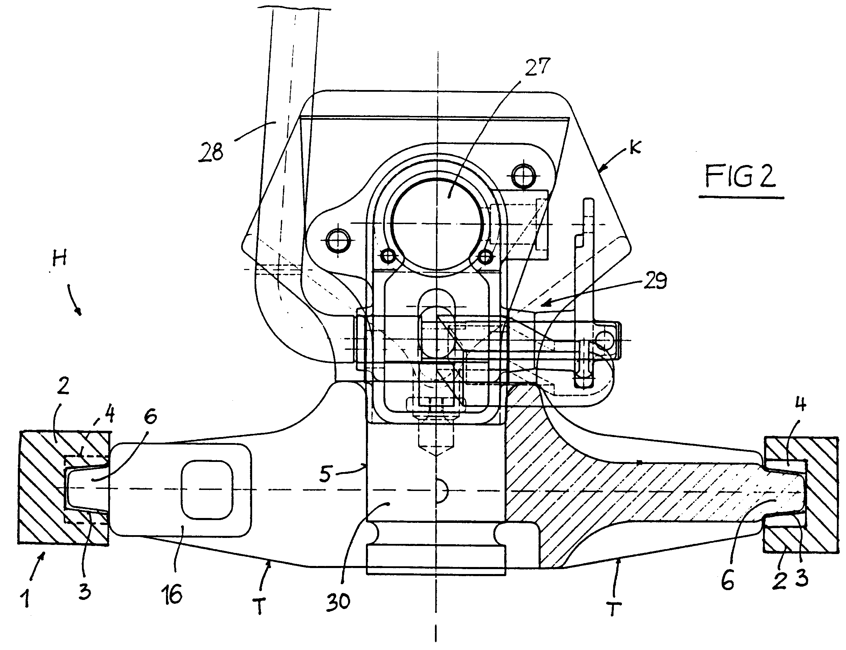

Eine Vorrichtung H zum höhenverstellbaren Halten einer Tragplatte T einer Anhänge-Kupplung gemäß den Figuren 1 und 2 weist zwei annähernd vertikal und parallel zueinander mit einem Abstand verlaufende U-Schienen auf, die Teil eines an einem Zugfahrzeug (nicht gezeigt) in üblicher Weise befestigbaren Trägers 1 sind. Die beiden U-Schienen 2 weisen mit ihren Führungsbahnen 3 definierenden Innenseiten zueinander. Im Verlauf der Führungsbahnen 3 sind in vorbestimmten Abständen in horizontaler Richtung miteinander fluchtende Verriegelungsaufnahmen-Paare 4 vorgesehen.

Die Tragplatte T weist eine Durchgaugsöffnung 5 auf, in der ein Kupplungskopf K (Figur 2) mit seinem Schaft 30 festlegbar ist. Der Schwerpunkt der Tragplatte ohne Kupplungskopf liegt etwa bei P₁, während der Schwerpunkt der mit dem Kupplungskopf K bestückten Tragplatte T in etwa bei P₂ liegt.

An den vertikalen Seitenrändern der Tragplatte T sind in die Führungsbahnen 3 eingreifende Führungselemente 6 angeformt. In oben an der Tragplatte T angeformten Lageraugen 7 ist eine horizontale Stange 8 um ihre Stangenachse drehbar gelagert, die aus zwei seitlichen Stangenabschnitten 8 und einer mittleren Kupplungsmuffe 9 mit Kupplungsstiften 10 besteht. Die Kupplungsmuffe 9 liegt in einer Ausnehmung 12 an der Oberseite der Tragplatte T. An der Führungsstange S ist eine Drehfelder 11 verankert, die sich an der Tragplatte T abstützt und die Stange S in einer Drehrichtung beaufschlagt. Die freien Endbereiche der Stangenabschnitte 8 bilden Verriegelungsglieder 13, 14, die zum Eingriff in die Verriegelungsaufnahmen 4 bestimmt sind und in die Führungsbahnen 3 ragen. Die Verriegelungsglieder 13 sind so ausgebildet, daß in sie in einer Drehstellung der Stange S (Figur 1 linke Seite) mit ihren breiteren Gliedteilen 14 in die Aufnahme 4 eingreifen und eine Höhenbewegung der Tragplatte T sperren, während sie in der in Figur 1 rechten Hälte gezeigten und um 90° verdrehten Stellung mit ihren Gliedteilen 14 in Richtung der Führungsbahnen 3 ausgerichtet sind und die Verschiebebewegung der Tragplatte T zwecks Höhenverstellung zulassen. An der Stange S, vorzugsweise an der Kupplungsmuffe 9, ist ein seitlich abstehender Drehgriff 15 angeordnet, mit dem sich die Stange S zwischen den vorerwähnten Stellungen hin- und herverdrehen läßt.

An einem außermittigen Fortsatz 16 an der Oberseite der Tragplatte T ist ein Haltegriff 18 frei auskragend befestigt, der einen in etwa oberhalb des Schwerpunkts G₁ und/oder P₂ liegenden Greifbereich G besitzt. Der Haltegriff 18 ist z.B. ein Rohr, das in eine Bohrung 17 des Fortsatzes 16 eingeschraubt ist und sich im Abstand und parallel zur Stange über den Schwerpunkt P₁ oder P₂ hinaus erstreckt.

Für die Stange S ist eine Drehsicherungsvorrichtung V vorgesehen. Diese weist einen Sicherungsbügel 19 mit zwei zueinander parallelen Schenkein 20 und 23 auf. Der längere, erste Schenkel 20 des Sicherungsbügels 19 durchsetzt den Haltegriff 18 und steht mit seinem freien Ende über da Auskragende des Haltegriffs 18 vor. Dort ist ein Betätiger 21 in Form eines Druckknopfes befestigt. Eine Feder 22 beaufschlagt den Sicherungsbügel in Figur 1 in Richtung zum Drehgriff 15 hin. Der zweite Schenkel 23 durchsetzt die Wurzel des Fortsatzes 16 und greift in der dargestellten Verriegelungsstellung der Stange S in eine Vertiefung 26 eines Sicherungshebels 25, der mit einer Buchse 24 drehfest mit der Stange S verbunden ist. Die Feder 11 beaufschlagt die Stange S in Richtung auf die Eingriffsstellung (linke Seite von Figur 1). Bei 31 ist eine Gleit- oder Führungsbahn angedeutet, die vorgesehen sein kann, um den Schenkel 23 in die Vertiefung 26 zu leiten. Es ist aber auch denkbar, das freie Ende des Schenkels 23 nur an der glatten und dem Fortsatz 16 zugewandten Frontseite des Sicherungshebels anliegen zu lassen, wenn das freie Ende des Schenkels 23 aus der Vertiefung 26 herausgehoben und der Sicherungshebel 25 verdreht worden ist.

Soll die Tragplatte aus der in Figur 1 gezeigten Stellung nach unten bewegt werden, so wird zunächst am Haltegriff 18 in dessen Greifbereich G angegriffen. Die Bedienungsperson drückt dann mit dem Daumen auf den Druckknopf 21, so daß der Schenkel 23 aus der Vertiefung 26 herausgehoben wird. Mit der anderen Hand dreht die Bedienungsperson den Drehgriff 15, so daß die Verriegelungsglieder 13, 14 in die in Figur 1 in der rechten Seite gezeigte Stellung kommen. Dann läßt sich die Tragplatte T verfahren. Sobald der Drehgriff 15 losgelassen wird, versucht die Feder 11, die Stange wieder in die Eingriffsstellung zurückzudrehen. Die Gliedteile 14 liegen an den Flanken der Führungsbahn 3 - und bremsen die Verstellbewegung. Werden tieferliegende Verriegelungsaufnahmen 4 erreicht, dann verdreht die Feder 11 die Stange S wieder zurück, bis die Verriegelungsglieder 13, 14 erneut eingreifen. Der Schenkel 23 fällt wieder in die Vertiefung 26. Sollte die Feder 11 die Verdrehung alleine nicht durchführen können, so braucht nur mit der ohnedies freien Hand am Drehgriff 15 nachgeholfen zu werden, bis der Schenkel 23 in die Vertiefung 26 einfällt.

In Figur 2 ist der mit seinem Schaft 30 in der Durchgangsöffnung 5 angeordnete Kupplungskopf K mit seinem vertikalen Kupplungszapfen 27, einem Betätigungshebel 28 und einem Verriegelungsmechanismus 29 schematisch erkennbar.

## Patentansprüche

1. Vorrichtung zum höhenverstellbaren Halten einer Tragplatte einer an ein Zugfahrzeug angebauten Anhänge-Kupplung, mit einem am Zugfahrzeug befestigbaren Träger, der zwei einander zugewandte, in Hochrichtung laufende U-Schienen aufweist, in denen die Tragplatte mit ihren Seitenrändern verschiebbar geführt ist, mit einer die Tragplatte horizontal durchsetzenden Stange, deren Endbereiche in die U-Schienen eingreifen und um die Stangenachse verdrehbare Verriegelungsglieder bilden, die durch Drehen der Stange mittels eines von der Stange abstehenden Drehgriffs in und außer Eingriff mit in den U-Schienen angeordneten, paarweisen Verriegelungsaufnahmen bringbar sind, dadurch gekennzeichnet, daß an der Tragplatte (T) oberseitig ein als weiterer Haltegriff (18) ausgebildeter Griff mit einem in etwa vertikal oberhalb des Schwerpunkts (P₁) der Tragplatte (T) liegenden, allseits frei zugänglichen Greifbereich (G) angeordnet ist, wobei der Haltegriff (18) eine Drehsicherungsvorrichtung (V) für die Stange (S) aufweist.

2. Vorrichtung nach Anspruch 1, dadurch gekennzeichnet, daß der Greifbereich (G) in etwa oberhalb des Schwerpunkts (P₂) der mit einem Kupplungskopf (K) bestückten Tragplatte (T) liegt.

3. Vorrichtung nach Anspruch 1, dadurch gekennzeichnet, daß der Haltegriff (18) ein in einem außermittigen Vorsprung (16) der Tragplatte (T) befestigtes, über die Mitte der Tragplatte (T₂) auskragendes Rohr ist, das in etwa parallel zur und mit Abstand oberhalb der Stange (S) angeordnet ist.

4. Vorrichtung nach Anspruch 1, dadurch gekennzeichnet, daß die Drehsicherungsvorrichtung (V) den Haltegriff (18) durchsetzt.

5. Vorrichtung nach Anspruch 4, dadurch gekennzeichnet, daß die Drehsicherungsvorrichtung wenigstens eine erste Wirkstellung aufweist, in der die Stange (S) mit im Eingriff mit den Verriegelungsaufnahmen (4) stehenden Verriegelungsgliedern (13, 14) festlegbar ist.

6. Vorrichtung nach Anspruch 4, dadurch gekennzeichnet, daß die Drehsicherungsvorrichtung eine erste Wirkstellung aufweist, in der die Stange (S) mit im Eingriff mit den Verriegelungsaufnahmen (4) stehenden Verriegelungsgliedern (13, 14) festlegbar ist, und daß eine zweite Wirkstellung der Drehsicherungsvorrichtung (V) vorgesehen ist, in der die Stange (S) mit außer Eingriff gebrachten Verriegelungsgliedern (13, 14) drehfeststellbar ist.

7. Vorrichtung nach den Ansprüchen 1 bis 6, dadurch gekennzeichnet, daß im Haltegriff (18) ein bei Einhandbedienung mittels Daumendrucks aktivierbarer Betätiger (21) für die Drehsicherungsvorrichtung (V) vorgesehen ist.

8. Vorrichtung nach wenigetens einem der Ansprüche 1 bis 7, dadurch gekennzeichnet, daß die Stange (S) durch Federkraft (11) in Drehrichtung zur Eingriffsstellung der Verriegelungsglieder (13, 14) beaufschlagt ist, daß auf der Stange (S) ein eine Vertiefung (26) aufweisender Sicherungshebel (25) befestigt ist und daß im Haltegriff ein Sicherungsbügel (19) zwischen einer Eingriffsstellung, in der er in die Vertiefung (26) eingreift, und einer Ausrückstellung, in der er aus der Vertiefung (26) ausgehoben ist, beweglich gelagert ist.

9. Vorrichtung nach Anspruch 8, dadurch gekennzeichnet, daß der Sicherungsbügel (19) zwei parallele, über ein Knie verbundene Schenkel (20, 23) aufweist, daß der erste Schenkel (20) den Haltegriff (18) durchsetzt und durch Federkraft (22) in Richtung zum freien Haltegriffende beaufschlagt ist, daß der zweite Schenkel (23) den Vorsprung (16) durchsetzt und mit seinem freien Ende über den Vorsprung (16) vorsteht, und daß der Sicherungshebel (25) an der der Tragplattenmitte zugewandten Seite des Vorsprungs (16) auf der Stange (S) angeordnet und in der Eingriffsstellung der Verriegelungsglieder (13, 14) mit seiner Vertiefung (26) auf das freie Ende des zweiten Schenkels (23) ausgerichtet ist.

10. Vorrichtung nach Anspruch 8, dadurch gekennzeichnet, daß am Sicherungshebel (25) wenigstens eine zur Stangenachse konzentrische Gleit- oder Führungsbahn (31), z.B. mit einem Gefälle zur Vertiefung (26), vorgesehen ist, die in der Vertiefung (26) endet.

11. Vorrichtung nach den Ansprüchen 7 und 9, dadurch gekennzeichnet, daß am freien Ende des ersten Schenkels (20) des Sicherungsbügels (19) ein den Betätiger (21) bildender Druckknopf angebracht ist.

12. Vorrichtung nach wenigstens einem der Ansprüche 1 bis 11, dadurch gekennzeichnet, daß der Drehgriff (15) im Abstand vom freien Ende des Haltegriffs (18) - der Stange (S) angebracht ist und in der Eingriffsstellung der Verriegelungsglieder (13, 14) in etwa mit dem Haltegriff (18) fluchtet.

## Claims

1. A device for the height-adjustable holding of a supporting plate of a trailer coupling attached to a tractive unit, with a support mountable on the tractive unit, which support has two U-rails extending in the vertical direction wherein the supporting plate is carried with its side edges for displacement, with a rod passing horizontally through the supporting plate, the end zones of which rod engage in the U-rails and form bolting elements rotatable round the rod axis, which can be brought into and out of engagement with paired bolt receiving means arranged in the U-rails by rotating the rod by means of a turning handle projecting from the rod, characterized in that there is arranged on the top of the supporting plate (T), a handle designed as a further holding handle (18) with a gripping zone (G) disposed approximately above the centre of gravity (P₁) of the supporting plate (T) and freely accessible from all sides, in which arrangement the handle (18) has a device (V) for the rod (S) for preventing rotation.

2. A device according to claim 1, characterized in that the gripping zone (G) lies approximately above the centre of gravity (P₂) of the supporting plate (T) provided with a coupling head (K).

3. A device according to claim 1, characterized in that the handle (18) is a pipe secured in an eccentric projection (16) of the supporting plate (T) and projecting beyond the centre (T₂) of the supporting plate, which pipe is arranged approximately parallel to, and at a distance above, the rod (S).

4. A device according to claim 1, characterized in that the device (V) preventing rotation passes through the handle (18).

5. A device according to claim 4, characterized in that the device preventing rotation has at least one first operative position wherein the rod (S) can be secured in position by means of bolting elements (13, 14) disposed in engagement with the bolt receiving means (4).

6. A device according to claim 4, characterized in that the device preventing rotation has a first operative position, wherein the rod (S) can be secured in position by means of bolting elements (13, 14) disposed in engagement with the bolt receiving means (4), and that a second operative position is provided for the device preventing rotation (V), wherein the rod (S) can be secured for rotation by means of bolting elements (13, 14) that have been brought out of engagement.

7. A device according to claims 1 to 6, characterized in that in the handle (18) an actuator (21) is provided for the device preventing rotation (V), which can be actuated by means of thumb pressure in the case of one-handed operation.

8. A device according to at least one of claims 1 to 7, characterized in that the rod (S) is loaded by a spring force (11) in the direction of rotation for placing the bolting elements (13, 14) into engagement, that a securing lever (25) having a recess (26) is fixed on the rod (S), and that a securing stirrup (19) is mounted for movement between an engaged position, wherein it engages in the recess (26), and a disengaged position, wherein it is lifted out of the recess (26).

9. A device according to claim 8, characterized in that the securing stirrup (19) has two parallel arms (20, 23) joined via a knee bend, that the first arm (20) passes through the handle (18) and is loaded by a spring force (22) in the direction towards the free end of the handle, that the second arm (23) passes through the projection (16) and projects with its free end beyond the projection (16), and that the securing lever (25) is arranged on the rod (S) on the side of the projection (16) facing the centre of the supporting plate and is, in the engaged position of the bolting elements (13, 14), orientated with its recess (26) towards the free end of the second arm (23).

10. A device according to claim 8, characterized in that on the securing lever (25), there is provided at least one slide-way or guideway (31) which is concentric with the rod axis, for example with a slope towards the recess (26), which ends in the recess (26).

11. A device according to claims 7 and 9, characterized in that a push button forming the actuator (21) is mounted on the free end of the first arm (20) of the securing stirrup (19).

12. A device according to at least one of claims 1 to 11, characterized in that the turning handle (15) is mounted on the rod (S) at a distance from the free end of the handle (18) and is approximately aligned with the handle (18) in the engaged position of the bolting elements (13, 14).

## Revendications

1. Dispositif pour fixer avec possibilité de réglage en hauteur une plaque de support d'un attelage de remorque monté sur un véhicule tracteur, équipé d'un support fixable sur le véhicule tracteur qui présente deux rails en U tournés l'un vers l'autre et dans le sens vertical, dans lesquels la plaque de support est guidée de façon coulissante par ses bords latéraux, d'une barre traversant horizontalement la plaque de support dont les zones d'extrémité s'engagent dans les rails en U et forment des éléments de verrouillage pouvant tourner autour de l'axe de la barre qui, en faisant tourner la barre au moyen d'une poignée tournante débordant de la barre, peuvent être engrenés et désengrenés avec les logements de verrouillage jumelés et disposés dans les rails en U, caractérisé en ce que, sur le dessus de la plaque de support (T), est disposée une poignée conçue comme une autre poignée de maintien (18) avec une zone de préhension (G) située à peu près à la verticale au-dessus du centre de gravité (P₁) de la plaque de support (T) et librement accessible de tous côtés, la poignée de maintien (18) présentant un dispositif de blocage de rotation (V) pour la barre (S).

2. Dispositif selon la revendication 1, caractérisé en ce que la zone de préhension (G) se situe à peu près au-dessus du centre de gravité (P₂) de la plaque de support (T) équipée d'une tête d'accouplement (K).

3. Dispositif selon la revendication 1, caractérisé en ce que la poignée de maintien (18) est un tube fixé sur une partie saillante (16) excentrée de la plaque de support (T) et en porte-à-faux au centre de la plaque de support (T₂), qui est disposé à peu près parallèlement à la barre et à distance au-dessus de celle-ci.

4. Dispositif selon la revendication 1, caractérisé en ce que le dispositif de blocage de rotation (V) traverse la poignée de maintien (18).

5. Dispositif selon la revendication 4, caractérisé en ce que le dispositif de blocage de rotation présente au moins une première position active où la barre (S) peut être fixée avec des éléments de verrouillage (13, 14) en prise avec les logements de verrouillage (4).

6. Dispositif selon la revendication 4, caractérisé en ce que le dispositif de blocage de rotation présente une première position active, où la barre (S) peut être fixée avec des éléments de verrouillage (13, 14) en prise avec les logements de verrouillage (4), et en ce qu'il est prévu une deuxième position active du dispositif de blocage de rotation (V), où la barre peut être fixée avec des éléments de verrouillage (13, 14) désengrenés, pour l'empêcher de tourner.

7. Dispositif selon les revendications 1 à 6, caractérisé en ce qu'un actionneur (21) actionnable avec une seule main par simple pression du pouce est prévu dans la poignée de maintien pour le dispositif de blocage de rotation (V).

8. Dispositif selon au moins l'une quelconque des revendications 1 à 7, caractérisé en ce que la barre (S) est sollicitée par la force du ressort (11) dans le sens de rotation pour la position d'engrènement des éléments de verrouillage (13, 14), en ce qu'un levier de blocage (25) présentant une cavité (26) est fixé sur la barre, et en ce que, dans la poignée de maintien, un étrier de blocage (19) est disposé de façon mobile entre une position d'engrènement, où il est en prise dans la cavité (26), et une position de débrayage, où il est enlevé de la cavité (26).

9. Dispositif selon la revendication 8, caractérisé en ce que l'étrier de blocage (19) présente deux branches (20, 23) parallèles et reliées par un coude, en ce que la première branche (20) traverse la poignée de maintien (18) et est sollicitée par la force du ressort (22) dans le sens de l'extrémité libre de la poignée de maintien, en ce que la deuxième branche (23) traverse la partie saillante (16) et dépasse de la partie saillante (16) avec son extrémité libre, et en ce que l'étrier de blocage (25) est disposé sur la barre (S) du côté de la partie saillante (16) tournée vers le centre de la plaque de support et, dans la position d'engrènement des éléments de verrouillage (13, 14), est aligné avec sa cavité (26) sur l'extrémité libre de la deuxième branche (23).

10. Dispositif selon la revendication 8, caractérisé en ce que, sur le levier de blocage (25), il est prévu au moins une glissière de glissement ou de guidage (31), par exemple avec une pente pour la cavité (26), qui se termine dans la cavité (26).

11. Dispositif selon les revendications 7 et 9, caractérisé en ce qu'un bouton-poussoir formant l'actionneur (21) est disposé sur l'extrémité libre de la première branche (20) de l'étrier de blocage (19).

12. Dispositif selon au moins l'une des revendications 1 à 11, caractérisé en ce que la poignée tournante (15) est placée à distance de l'extrémité libre de la poignée de maintien (18) sur la barre (S) et, dans la position d'engrènement des éléments de verrouillage (13, 14), est alignée à peu près avec la poignée de maintien (18).
